**Europäisches Patentamt**

**European Patent Office**

**Office européen des brevets**

(11) Numéro de publication: **0 146 453**
**B1**

(12) # FASCICULE DE BREVET EUROPEEN

(45) Date de publication du fascicule du brevet:
**15.07.87**

(51) Int. Cl.⁴: **E 04 F 13/08,** F 16 B 13/04,
F 16 B 13/06

(21) Numéro de dépôt: **84402446.3**

(22) Date de dépôt: **29.11.84**

(54) **Element de fixation de plaques de parement.**

(30) Priorité: **02.12.83 FR 8319331**

(43) Date de publication de la demande:
**26.06.85 Bulletin 85/26**

(45) Mention de la délivrance du brevet:
**15.07.87 Bulletin 87/29**

(84) Etats contractants désignés:
**BE DE FR GB IT LU NL**

(56) Documents cités:
**DE - A - 2 418 205**
**DE - A - 2 559 367**
**FR - A - 2 497 889**
**GB - A - 2 129 084**
**US - A - 3 227 031**

(73) Titulaire: **OLIN INTERNATIONAL CORPORATION,
Shamrock Avenue, East Alton Illinois 62024 (US)**

(72) Inventeur: **Ollivier, Jean, 31, rue Georges Bonnet,
26000 Valence (Drôme) (FR)**
Inventeur: **Almeras, Rolland, 15, rue du Général
Chapelle, 07300 Tournon (Ardèche) (FR)**

(74) Mandataire: **Bloch, Robert et al, 6, rue du Faubourg
Saint-Honoré, F-75008 Paris (FR)**

ACTORUM AG

## Description

La présente invention concerne un élément de fixation de deux pièces, comprenant une tige de fixation, à une extrémité de celle-ci, des moyens d'ancrage de la tige dans l'une des deux pièces, à l'autre extrémité de la tige, des moyens d'ancrage de la tige dans l'autre des deux pièces, les moyens d'ancrage de la tige dans l'une des deux pièces ainsi que les moyens d'ancrage de la tige dans l'autre des deux pièces comprenant une cheville expansible et un noyau d'expansion et étant commandés par un écrou commun.

Un tel élément de fixation est en particulier destiné à la fixation de plaques de parement pour revêtement de façades ou autres murs et parois, permettant en outre de ménager entre la façade et les plaques un espace d'isolation thermique et phonique. Ces plaques de parement peuvent être en un matériau quelconque, comme le béton ou la brique, mais il est surtout fait ici référence aux plaques en pierre.

On connaît déjà un élément de fixation du type mentionné ci-dessus, notamment par la demande de brevet allemand DE-A-2 559 367.

Toutefois, l'élément de fixation de ce document antérieur présente un inconvénient. Une fois réalisé l'ancrage de la tige dans un mur, après qu'une pièce à y fixer ait été positionnée par rapport au mur de façon, a priori, définitive et ait servi de gabarit de perçage, si la pièce à fixer a quand même été légèrement déplacée, il n'est plus possible de la repositionner correctement, car les ancrages de la tige dans le mur et dans la pièce à fixer s'effectuent concomitamment.

La présente invention vise à palier cet inconvénient.

A cet effet, la présente invention concerne un élément de fixation du type mentionné ci-dessus, caractérisé par le fait que les deux portions d'extrémité de la tige sont filetées, chaque cheville expansible est en butée contre un épaulement de la tige, l'un des noyaux d'expansion est taraudé et vissé sur la portion d'extrémité correspondante de la tige et l'écrou d'ancrage est vissé sur et solidaire en rotation, de façon détachable, de l'autre portion d'extrémité de la tige.

Outre la possibilité, quand il s'agit d'une plaque de parement, après l'avoir placée dans sa position de parement, de percer les orifices d'ancrage dans le mur, d'ancrer la tige de fixation dans le mur et dans la plaque, dont les orifices sont conformés en conséquence, et ce, sans aucune autre manutention de la plaque, l'élément de l'invention permet encore, au cas où la plaque, malgré les precautions, aurait été légèrement déplacée de sa position de parement, de la repositionner correctement.

On notera que la solidarisation de l'écrou et de la tige sera rompue au-delà d'un couple de torsion déterminé par l'expansion désirée de la cheville d'ancrage dans le mur.

Quand on tourne l'écrou d'ancrage, il entraîne d'abord en rotation la tige de fixation, ce qui provoque l'expansion de la cheville d'ancrage dans le mur, et quand la tige est ancrée dans le mur, l'écrou se désolidarise en rotation de la tige et se visse sur la tige, ce qui provoque l'expansion de la cheville d'ancrage dans la plaque.

Dans ce cas, il est possible de maîtriser l'intervalle entre le mur et la plaque et sa dépose, par ailleurs, est tout aussi facile que sa pose.

De préférence, le noyau d'expansion de la cheville d'ancrage dans le mur comporte au moins un ergot d'immobilisation en rotation.

Simplicité et souplesse d'emploi, solidité et sécurité, telles sont les qualités de l'élément de fixation de l'invention.

L'invention sera mieux comprise à l'aide de la description suivante d'une forme de réalisation préférée de l'élément de fixation de l'invention et de sa méthode d'utilisation, en référence aux dessins annexés, sur lesquels:

la fig. 1 représente une vue latérale de l'élément de fixation de la présente invention;

la fig. 2 représente une vue en coupe partielle de l'élément de la fig. 1 après ancrage de la tige dans un mur;

la fig. 3 représente une vue en coupe partielle de l'élément des figures 1 et 2, après ancrage de la tige dans le mur et dans une plaque de parement;

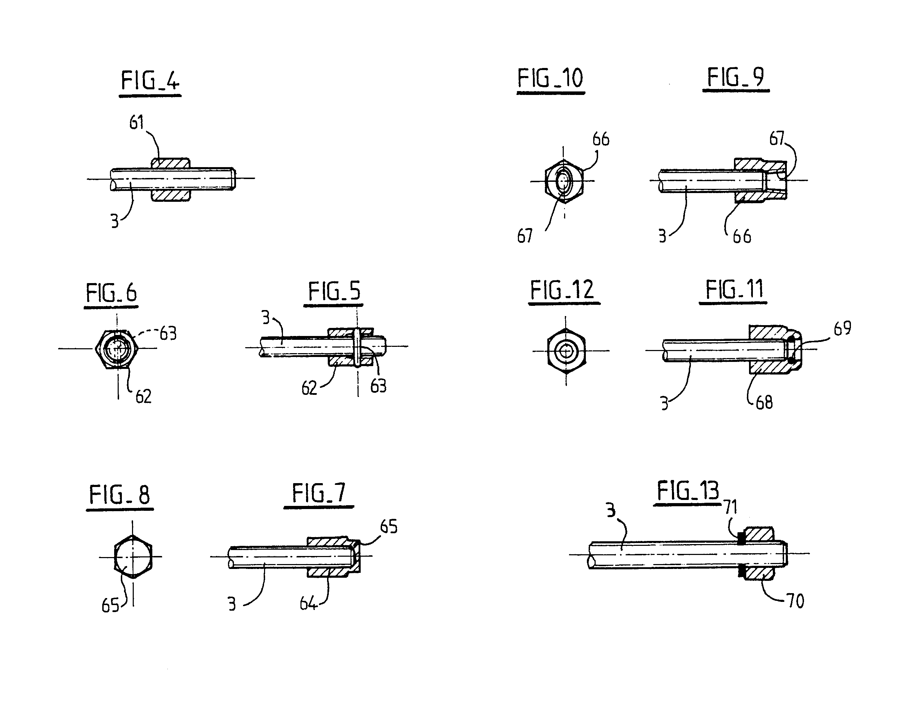

la fig. 4 représente une vue en coupe axiale d'une première forme de réalisation de l'écrou d'ancrage;

la fig. 5 représente une vue en coupe axiale d'une deuxième forme de réalisation de l'écrou d'ancrage;

la fig. 6 représente une vue de face de l'écrou de la fig. 5;

la fig. 7 représente une vue en coupe axiale d'une troisième forme de réalisation de l'écrou d'ancrage;

la fig. 8 représente une vue de face de l'écrou de la fig. 7;

la fig. 9 représente une vue en coupe axiale d'une quatrième forme de réalisation de l'écrou d'ancrage;

la fig. 10 représente une vue de face de l'écrou de la fig. 9;

la fig. 11 représente une vue en coupe axiale d'une cinquième forme de réalisation de l'écrou d'ancrage;

la fig. 12 représente une vue de face de l'écrou de la fig. 11, et

la fig. 13 représente une vue en coupe axiale d'une sixième forme de réalisation de l'écrou d'ancrage.

Il n'a jusqu'ici été fait référence qu'à la fixation de plaques de parement. Certes, l'invention proposée est née de ce problème particulier des plaques de parement. Mais, il est clair que l'invention revendiquée ne doit pas être ainsi limitée, et que l'élément de fixation qui va maintenant être décrit peut servir aussi bien à la fixation de ces plaques que de tout autre chose. Il faut même souligner que l'élément de fixation de l'invention peut non seulement assurer une fonction de fixation mais également une fonction d'assemblage de deux pièces entre elles, comme par exemple deux éléments de meuble. Quoi-qu'il en soit, et pour la commodité de la description, il sera désormais fait référence à une pièce à fixer.

L'élément de fixation comprend une tige 1, filetée à ses deux extrémités 2, 3, dont l'une 2, est destinée à recevoir un noyau 4 d'expansion d'une cheville expansible 5, et dont l'autre 3 est destinée à recevoir un écrou d'ancrage 6, pour l'expansion d'une deuxiè-

me cheville expansible 7 par l'intermédiaire d'un autre noyau d'expansion 8.

Pour leur expansion, les chevilles 5, 7 doivent être naturellement fixées en translation sur la tige 1. A cet effet, deux collerettes d'appui 9, 10 sont respectivement disposées autour de la tige 1, dans le cas d'espèce, à l'extrémité intérieure des deux filetages, pour servir de butées aux deux chevilles, ces collerettes étant elles-mêmes en butée contre des déformations, ou des pincements, 11, 12 de la tige 1.

Ces collerettes pourraient d'ailleurs êtres fixées sur la tige, par exemple par collage ou soudage. Elles pourraient l'être également par vissage sur les parties filetées de la tige, si elles se présentaient sous forme d'écrous, comme cela est d'ailleurs illustré sur les dessins. Dans ce cas, les pincements 11, 12 ne seraient plus indispensables.

On soulignera ici le fait que ces collerettes ont pour rôle de servir de butées aux chevilles d'expansion, et que les caractéristiques qu'on vient d'en donner doivent être associées à la nature de la tige. Il s'agit ici d'une tige en acier, c'est-à-dire en matériau relativement noble et cher qui doit donc être économisé au maximum.

Avec une tige en un autre matériau, il suffirait de prévoir deux épaulements annulaires. Les collerettes en question permettent donc d'économiser le volume du manchon qui sinon s'appuierait sur les deux épaulements et s'étendrait de l'un à l'autre.

L'élément de fixation, dont on vient de décrire la tige, ayant pour application principale le bâtiment, et devant à cet égard supporter les intempéries, il est prévu, sensiblement dans la partie centrale de la tige 1, un anneau 13 faisant fonction de goutte d'eau, qui est un terme de métier.

La collerette 9 reçoit donc la cheville 5 dont la jupe d'expansion est ouverte vers l'extrémité 2 de la tige 1. Son noyau d'expansion 4 est un noyau taraudé, vissé sur l'extrémité 2 de la tige. Il comporte, dans sa partie la plus large, un ergot 14 d'immobilisation en rotation. De même, la cheville 5 est pourvue d'ailettes longitudinales 15 d'immobilisation en rotation.

La collerette 10 reçoit la cheville 7, elle est identique à la cheville 5, avec sa jupe d'expansion ouverte vers l'extrémité 3 de la tige. Le noyau 8 de cette cheville, par contre, n'est pas taraudé, et il est monté libre sur l'extrémité 3 de la tige. Les chevilles expansibles à noyau d'expansion étant par ailleurs parfaitement connues, elles ne seront pas ici davantage décrites.

A l'extrémité de la portion filetée 3 de la tige 1, celle sur laquelle est donc monté le noyau d'expansion lisse 8, est vissé l'écrou d'ancrage 6, pourvu d'un taraudage correspondant au filetage de cette portion filetée 3. Il est monté solidaire en rotation, mais de façon détachable, de la tige. Cette solidarisation de l'écrou 6 et de la tige 1 est rompue au-delà d'un couple de serrage, déterminé par l'expansion désirée de la cheville opposée 5, comme on le précisera plus loin en liaison avec la méthode de fixation de la pièce considérée. Cet écrou 6 peut se présenter sous plusieurs formes.

Il peut s'agir d'un écrou 61, vissé et collé sur la tige, et dont la fixation par la colle se rompt lors du couple en question.

Il peut s'agir d'un écrou 62, relié à la tige 1 par une goupille 63 chassée diamétralement au travers de l'écrou et de la tige, et qui se trouve cisaillée par la tige 1, lors du couple considéré.

Il peut ancore s'agir d'un écrou 64 à fond cisaillable 65, qui se trouve cisaillé par la tige 1 lors du couple de rupture.

On pourrait aussi prévoir un écrou 66, dont une partie 67 de l'alésage n'est pas cylindrique et dont le taraudage serait usiné ou réusiné au-delà du couple de rupture.

Pourrait également être adopté un écrou 68 à jonc serti 69.

Enfin, et bien qu'il ne s'agisse pas ici d'une énumération exhaustive, on pourrait considérer un écrou normal 70, mais en combinaison avec un jonc, ou un circlips, 71 serti sur la portion 3 de la tige 1.

Ayant décrit l'élement de fixation, abordons maintenant son emploi, c'est-à-dire la méthode de pose ou de fixation d'une pièce, et notamment d'une plaque de parement à fixer à un mur.

Une pièce 100, déjà pourvue d'orifices de passages 101, pour avoir été percés en usine, et destinés à recevoir, chacun, un élément de fixation tel que décrit ci-dessus, est positionnée, de façon définitive, par rapport à un mur 102 à revêtir de cette pièce qui doit donc y être fixée, avec interposition d'un espace d'isolation 103. On perce ensuite dans le mur 102, en utilisant la pièce 100 comme gabarit de perçage, des orifices d'ancrage 104, destinés à recevoir l'extrémité filetée 2 d'une tige 1, avec sa cheville 5 et son noyau 4.

Une fois les orifices 104 percés, on y introduit les portions filetées 2 des tiges 1, avec leur cheville 5 et leur noyau 4, tout en introduisant les portions filetées 3 des tiges 1, avec leur cheville 7, leur noyeau 8 et leur écrou d'ancrage 6, dans les orifices 101 de la pièce 100, et, à l'aide d'un outil 105, une clef dont la portion active est introduite dans chacun des orifices 101 de la pièce 100, on tourne les écrous d'ancrage 6 des tiges 1.

Le noyau d'expansion 4 étant immobile en rotation dans son trou 104, grâce à son ergot 14, la rotation de l'écrou 6 entraîne la rotation de la portion filetée 2 de la tige, ce qui entraîne en translation, vers la partie centrale de la tige 1, le noyau taraudé 4, provoquant l'expansion de la cheville 5, et donc l'ancrage de la tige 1 dans l'orifice 104 correspondant du mur.

On continue alors de tourner l'écrou d'ancrage 6, pour entraîner le noyau d'expansion 4 suffisamment près de l'ouverture de l'orifice 104 du mur, et donc accroître l'expansion de la cheville, et par suite le couple résistant, jusqu'à ce que celui-ci atteigne le couple de rupture de la liaison écrou 6 - tige 1. Alors celui-ci se désolidarise en translation de la tige 1, et donc de sa portion filetée 3.

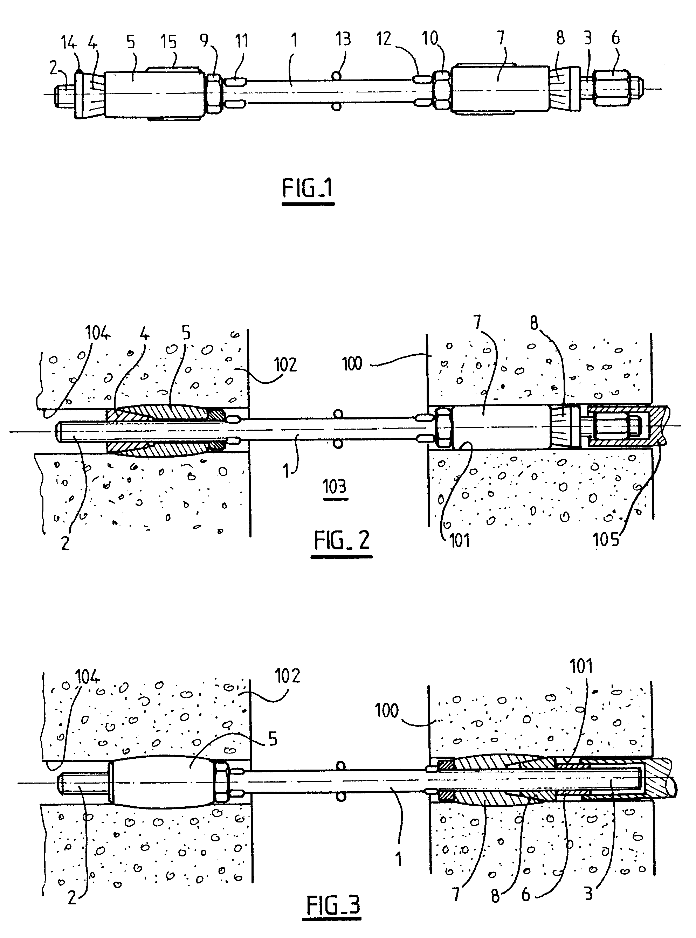

On continue ensuite, à l'aide de la clef 105, de tourner l'écrou d'ancrage 6 pour, non plus ancrer la tige dans le mur, mais ancrer la tige dans la pièce 100. L'écrou 6 qui se visse sur la portion filetée 3 de la tige 1, jusqu'à ce qu'il ne soit plus possible de le faire tourner avec la clef 105, entraîne le noyau d'expansion lisse 8 en translation vers la partie centrale de la tige 1, ce qui provoque l'expansion de la cheville 7 et son ancrage dans la paroi de l'orifice 101 de la pièce (fig. 3).

L'écrou 6 a donc commandé aussi bien l'ancrage de la tige 1 dans le mur 102 que son ancrage dans la pièce 100.

Grâce à l'ancrage double de la tige dans le mur et dans la pièce, cette dernière est solidement fixée au mur, et ce de façon fiable. Grâce à l'écrou d'ancrage commun aux deux organes d'ancrage de l'élément de fixation, celui-ci est d'un emploi particulièrement facile.

Grâce à l'ancrage de la tige dans la pièce, la manutention de cette pièce, pour sa pose, est simplifiée.

On a décrit une pièces fixée à un mur avec interposition d'un espace d'isolation. On remarquera que l'invention, dans ses moyens essentiels, n'est pas limitée à une telle application et que l'élément de fixation revendiqué pourrait très bien être agencé pour que, par exemple, les parois du mur 102 et de la pièce 100, qui se font face dans l'exemple des figures 2 et 3, soient l'une sur l'autre.

**Revendications**

1. Elément de fixation de deux pièces, comprenant une tige de fixation (1), à une extrémité (2) de celle-ci, des moyens (4, 5, 9) d'ancrage de la tige (1) dans l'une des deux pièces, à l'autre extrémité (3) de la tige (1), des moyens d'ancrage (8, 7, 10) de la tige (1) dans l'autre des deux pièces, les moyens d'ancrage (4, 5, 9) et les moyens d'ancrage (8, 7, 10) de la tige (1) dans les deux pièces, respectivement, comprenant une cheville expansible (5, 7) et un noyau d'expansion (4, 8) et étant commandés par un écrou commun (6), élément caractérisé par le fait que les deux portions d'extrémité (2, 3) de la tige (1) sont filetées, chaque cheville expansible (5, 7) est en butée contre un épaulement (9, 10, 11, 12) de la tige (1), l'un (4) des noyau d'expansion est taraudé et vissé sur la portion d'extrémité correspondante (2) de la tige (1) et l'écrou d'ancrage (6) est vissé sur et solidaire en rotation, de façon détachable, de l'autre portion d'extrémité (3) de la tige (1).

2. Elément de fixation selon la revendication 1, dans lequel le noyau d'expansion taraudé (4) comporte au moins un ergot (14) d'immobilisation en rotation.

3. Elément de fixation selon l'une des revendications 1 et 2, dans lqeuel l'écrou d'ancrage (6) comporte un fond cisaillable (65).

**Patentansprüche**

1. Einrichtung, um zwei Teile miteinander zu verbinden, mit einem Verbindungsschaft (1), an dessen einem Ende (2) Verankerungselemente (4, 5, 9) zur Verankerung des Schaftes (1) in einem der beiden Teile und an dessen anderem Ende (3) Verankerungselemente (8, 7, 10) zur Verankerung des Schaftes (1) in dem anderen der beiden Teile vorgesehen sind, wobei die Verankerungselemente (4, 5, 9) und die Verankerungselemente (8, 7, 10) zur Verankerung des Schaftes (1) in den beiden Teilen jeweils einen Spreizdübel (5, 7) und einen Spreizkern (4, 8) umfassen, die mittels einer gemeinsamen Mutter (6) betätigbar sind, dadurch gekennzeichnet, dass die beiden äusseren Enden (2, 3) des Schaftes (1) jeweils mit einem Aussengewinde versehen sind, dass jeder Spreizdübel (5, 7) gegen eine Schulter (9, 10, 11, 12) des Schaftes (1) anliegt, dass der eine Spreizkern (4) ein Innengewinde aufweist und auf das zugeordnete äussere Ende (2) des Schaftes (1) aufgeschraubt ist, und dass die Verankerungsmutter (6) auf das andere äussere Ende (3) des Schaftes (1) aufgeschraubt und lösbar gegen Drehung gesichert ist.

2. Einrichtung nach Anspruch 1, bei der der mit Innengewinde versehene Spreizkern (4) mindestens einen Nocken (14) aufweist, um den Spreizkern gegen Rotation zu sichern.

3. Einrichtung nach einem der Ansprüche 1 und 2, bei dem die Verankerungsschraube (6) einen abscherbaren Boden (65) aufweist.

**Claims**

1. An Element for fixing two pieces, including a fixing rod (1), at one end (2) thereof means (4, 5, 9) for anchoring the rod (1) in one of the two pieces, at the other end (3) of the rod (1) means (8, 7, 10) for anchoring the rod (1) in the other of the two pieces, the means (4, 5, 9) and the means (8, 7, 10) for anchoring the rod (1) in the two pieces, respectively, including an expandable plug (5, 7) and an expanding core (4, 8) and being controlled by a common nut (6), which element is characterized by the fact the the two end portions (2, 3) of the rod (1) are threaded, each expandable plug (5, 7) is in abutment against a shoulder (9, 10, 11, 12) of the rod (1), one (4) of the expanding cores is threaded and screwed onto the corresponding end portion (2) of the rod (1) and the anchoring nut (6) is screwed onto and is removably rotatably interlocked with the other end portion (3) of the rod (1).

2. Fixing element according to claim 1, wherein the threaded expanding core (4) includes at least one stud (14) securing it against rotation.

3. Fixing element according to one of claims 1 and 2, wherein the anchoring nut (6) includes a shearable bottom (65).

FIG.1

FIG. 2

FIG.3

FIG_4

61

3

FIG_10

66

67

67

FIG_9

67

3

66

FIG_6

63

62

FIG_5

3

62

63

FIG_12

FIG_11

69

3

68

FIG_8

65

65

FIG_7

65

3

64

FIG_13

3

71

70

0 146 453